# EUROPÄISCHE PATENTSCHRIFT

(11) **EP 2 629 489 B1**
(45) Veröffentlichungstag und Bekanntmachung des Hinweises auf die Patenterteilung: **20.08.2014**
(21) Anmeldenummer: 12196641.0
(22) Anmeldetag: 12.12.2012
(51) Int. Cl.: H04L 29/08, H04W 52/02, H04W 74/08, H04W 84/18

(54) **Verfahren zur Übertragung von Daten an einen Empfänger**
Method for transmitting data to a receiver
Procédé destiné à la transmission de données à un récepteur

(30) Priorität: 15.02.2012 DE 102012002803
(43) Veröffentlichungstag der Anmeldung: 21.08.2013
(73) Patentinhaber: RWE Effizienz GmbH, 44139 Dortmund (DE)
(72) Erfinder: Lux, Daniel, 9520 Skorping (DK); Westermeier, Michael, 44789 Bochum (DE); Reinelt, Jens, 44797 Bochum (DE)
(74) Vertreter: Cohausz & Florack

(56) Entgegenhaltungen:
- EP-A1- 2 173 134
- HUANG R ET AL: "SAM-MAC: An efficient channel assignment scheme for multi-channel ad hoc networks", COMPUTER NETWORKS, ELSEVIER SCIENCE PUBLISHERS B.V., AMSTERDAM, NL, Bd. 52, Nr. 8, 12. Juni 2008 (2008-06-12), Seiten 1634-1646, XP022615578, ISSN: 1389-1286, DOI: 10.1016/J.COMNET.2008.02.004 [gefunden am 2008-02-21]
- CALLAWAY E ET AL: "HOME NETWORKING WITH IEEE 802.15.4: A DEVELOPING STANDARD FOR LOW-RATE WIRELESS PERSONAL AREA NETWORKS", IEEE COMMUNICATIONS MAGAZINE, IEEE SERVICE CENTER, PISCATAWAY, US, Bd. 40, Nr. 8, 1. August 2002 (2002-08-01) , Seiten 70-77, XP001142605, ISSN: 0163-6804, DOI: 10.1109/MCOM.2002.1024418

## Beschreibung

Der Gegenstand betrifft ein Verfahren zum Übertragen von Daten von einem Sender an einen Empfänger in einem System zur Heimautomatisierung sowie ein System zur Heimautomatisierung.

Systeme zur Heimautomatisierung sind hinlänglich bekannt. So ist zum Beispiel unter der Bezeichnung EIB/KNX ein kabelgebundenes Heimautomatisierungssystem bekannt, bei dem über einen seriellen Bus Nachrichten zwischen Sensoren und Aktoren ausgetauscht und entsprechend vorgebbarer Regeln (Parameter) elektrische Verbraucher gesteuert werden. Ein solches Bussystem erfordert jedoch eine aufwändige Verkabelung, die fast ausschließlich bei einem Neubau realisierbar ist.

Bei der Nachrüstung von Heimautomatisierungslösungen in bestehende Elektroinstallationen eignen sich insbesondere funkbetriebene Lösungen. Hierbei kommunizieren Sensoren und Aktoren sowie ggf. zentrale Steuerrechner über Hochfrequenzfunk. Die im Nachfolgenden beschriebenen Sensoren und Aktoren können jeweils Sender oder Empfänger einer Kommunikationsnachricht sein. Vorzugsweise ist jedoch ein Sensor ein Sender einer Kommunikationsnachricht und ein Aktor ein Empfänger einer Kommunikationsnachricht.

Da bei der Nachrüstung jedoch an vielen Stellen, an denen Sensoren oder Aktoren eingesetzt werden, keine Stromversorgung vorhanden ist, sind zumindest energetisch eigengespeiste Sensoren (z.B. mittels Batterien, Kondensatoren, etc.) notwendig. Bei den eigengespeisten Geräten ist der Stromverbrauch jedoch ein entscheidendes Kriterium für die Dauer des Betriebs des Geräts mit einer einzigen Batterie. Sensoren, die ununterbrochen mit Aktoren und zentralen Steuerrechnern kommunizieren oder in regelmäßigen Abständen mit den Aktoren bzw. den zentralen Steuerrechnern kommunizieren, verbrauchen unnötig viel Strom.

Nachteilig bei bekannten Systemen ist, dass die Stromaufnahme und daher die benötigte Energie zum Betrieb eines Funkempfängers so hoch ist, dass dieser bei batteriebetriebenen Geräten nicht permanent eingeschaltet bleiben kann. Dies gilt insbesondere bei Geräten, bei denen eine möglichst lange Batterielebensdauer gewünscht wird, häufig mehrere Jahre und insbesondere bei Geräten mit Funkdatenübertragung für die Frequenzbänder bei 2,4 GHz, bei 868 MHz und 433 MHz.

Eine der simpelsten Lösungen ist, dass der Empfänger den Sender bzw. das initiierende Gerät in einem festen oder variablen Intervall fragt, ob Daten zu senden sind. Dies wird als Polling bezeichnet. Dabei wird eine erhebliche Energie beim Empfänger für das Polling benötigt und zusätzlich erhöht die Intervalldauer die Latenzzeit für eine spontane Datenübertragung vom Sender zum Empfänger.

Die Veröffentlichungen DE 10 2006 034 066 A1 und DE 10 2006 034 063 A1 zeigen darüber hinaus, wie die erheblichen Nachteile einer solchen zyklischen Datenübertragung mit einem festen Zeitintervall vermieden werden können und wie eine für nicht an der Kommunikation beteiligte Geräte pseudo-zufällige Intervalldauer erreicht werden kann.

Laut Veröffentlichung EP 2 173 134 A1 können mehrere Kanäle zur Datenübertragung verwendet werden, allerdings ist die Verwendung der Kanäle durch ein probabilistisches Schema fest vorgegeben und kann nicht flexibel an die Gegebenheiten vor Ort angepasst werden.

In der Veröffentlichung XP022615578 werden mehrere Kanäle flexibel zur Datenübertragung verwendet und über einen gemeinsamen Kanal verwaltet. Dies erfordert jedoch einen speziellen Aufbau der Knoten; ein erster Transceiver verwendet exklusiv den gemeinsamen Kanal, während ein zweiter Transceiver zwischen den Datenkanälen wechselt. Ein Wechsel der Transceiver in einen Ruhezustand ist nicht offenbart.

Die Veröffentlichung XP001142605 ist eine Übersicht über den Standard IEEE 802.15.4 und beschreibt unter anderem die Kanalstruktur. Energiesparen durch Übergang in einen Ruhezustand wird nicht erwähnt.

Eine andere Form der Organisation der Kommunikation ist die Verwendung eines Geräts, das in zeitlich konstanten Abständen einen "Beacon" aussendet. Ein Beacon ist ein besonderes, per Funk übertragenes Datenpaket einer zentralen Station, auf das sich alle beteiligten batteriebetriebenen Funkdatenempfänger synchronisieren. Die Kommunikation zwischen den Geräten wird dann immer unmittelbar nach dem Empfang des Beacons nach einem der bekannten Verfahren zur Koordination des Kanalzugangs - z.B. CSMA/CA - durchgeführt. Geräte, welche die Synchronität verlieren, können durch dauerhaftes Einschalten ihres Empfängers bis zum Eintreffen des nächsten Beacons wieder synchronisiert werden. Der Nachteil des Beacons ist aber ebenso offensichtlich: Es ist ein in der Reichweite von allen Empfängern liegender Beacon-Sender - oft auch "Master" genannt - notwendig.

Aber auch bei diesen Lösungen ist es notwendig, dass der Sender stets auf den Empfang eines Beacon warten muss und nicht in einen Schlafmodus wechseln kann.

Aufgrund der genannten Nachteile wurden so genannte "Burst-Wakeup" Verfahren entwickelt. Bei diesen Verfahren wacht ein Empfänger in einem festen zeitlichen Aufwachintervall (Burst-Intervall) für eine sehr kurze Dauer auf, um zu überprüfen, ob ein Sender gerade eine Erkennungsbitfolge (Burst-Präambel), ggf. zusammen mit Nutzdaten (Burst-Wakeup Paket) sendet. Eine Erkennungsbitfolge ist eine Präambel, d.h. eine definierte Bitfolge, z.B. 010101..., vor dem Beginn der eigentlichen Nutzdaten. Bei den bekannten Verfahren ist die Erkennungsbitfolge sehr stark verlängert, um sicherzustellen, dass innerhalb eines Aufwachintervalls vom Empfänger zumindest einen Teil der Erkennungsbitfolge detektiert werden kann.

Sofern der Empfänger innerhalb (zu Beginn, während oder am Ende) des Aufwachintervalls - beim Aufwachen - auf dem Funkkanal keine Burst-Präambel detektiert, wird der RF-Transceiver des Empfängers sofort wieder abgeschaltet, um Energie zu sparen. Der Empfänger wird für die restliche Dauer des Aufwachintervalls in einen Energiesparmodus (Sleep-Modus) versetzt und wacht erst im nächsten Burst-Intervall wieder auf.

Wenn der Empfänger beim Aufwachen eine Burst-Präambel detektiert, bleibt der Empfänger wach, bis die eigentlichen Nutzdaten folgen und empfängt diese. Oft folgen darauf weitere Kommunikationsvorgänge. Das detektieren der Burst-Präambel erfordert empfängerseitig die Detektion der definierten Bitfolge. Hierzu muss nur ein sehr kurzer Abschnitt der Burst-Präambel im Empfänger empfangen werden. Es reicht aus, wenn der Empfänger nur wenige Bits der gesamten Burst-Präambel empfängt, solange der Empfänger anhand dieser Bits feststellen kann, dass es sich hierbei um Teile der gesamten Burst-Präambel handelt.

Dieses Burst-Verfahren ist von besonderem Interesse, da der durchschnittliche Stromverbrauch im Empfänger aufgrund des nur kurzen regelmäßigen Aufwachens relativ niedrig ist. Aus diesem Grunde finden sich in einschlägigen Implementierungen von Funk-Transceivern bereits Schaltungen, die das Verfahren des Burst-Wakeup automatisch ausführen, d.h. ohne dass der Mikrocontroller des Empfängers seinen Sleep-Modus verlassen muss, bevor ein gültiges Datenpaket mit einer Burst-Präambel empfangen wurde. Dies führt zu weiteren Energieeinsparungen auf der Seite des Empfängers, da die Mikrocontroller des Empfängers nur dann aus dem Sleep-Modus aktiviert wird, wenn der Funk-Transceiver bereits festgestellt hat, dass eine Funkkommunikation mit dem Sender stattfinden soll.

Das Burst-Verfahren ist jedoch nur dann sinnvoll anwendbar, wenn der Sender den Funkkanal kennt, auf dem die Burst-Präambel übertragen werden soll. Bei vielen Systemen der Heimautomatisierung ist jedoch gerade der Sender dasjenige Gerät, welches energetisch eigengespeist ist. Um in einem solchen Gerät möglichst viel Energie zu sparen, ist es sinnvoll, dieses im inaktiven Zustand in einen Schlafmodus zu versetzen. In einem solchen Schlafmodus reagiert das Gerät beispielsweise ausschließlich auf Benutzereingaben oder benutzergesteuerte Ereignisse, wie beispielsweise das Drücken einer Taste. Erst bei einem solchen Ereignis wacht der Sender auf und sollte möglichst umgehend einen dem Ereignis zugeordneten Befehl an den Empfänger, beispielweise den Aktor zum Schalten einer Lampe, übermitteln. Da der Sender jedoch im Schlafmodus Informationen zu veränderten Funkkanälen nicht empfangen kann und es zusätzlich aufgrund von Störungen im Funkkanal als auch aufgrund von gesetzlichen Anforderungen notwendig sein kann, die Frequenz von Datenkanälen im laufenden Betrieb zu ändern, kann es vorkommen, dass ein Sender im Moment eines Ereignisses keine Kenntnis von einem aktuellen Datenkanal hat. Dennoch muss der Sender in der Lage sein, die ereignisgesteuerten Befehle an den Empfänger zeitnah zu übermitteln.

Somit lag dem Gegenstand die Aufgabe zugrunde, ein Verfahren zum Übertragen von Daten von einem Sender an einen Empfänger in einem System zur Heimautomatisierung zur Verfügung zu stellen, welches ein zuverlässiges Übertragen von Nutzdaten bei einem gleichzeitig energiesparenden Betrieb des Senders ermöglicht.

Diese Aufgabe wird durch ein Verfahren nach Anspruch 1 sowie ein System nach Anspruch 8 gelöst.

Um es einem Sender zu ermöglichen, Nutzdaten unmittelbar an einen Empfänger zu übermitteln, wird vorgeschlagen, dass zumindest zwei feste Synchronisierungskanäle sowohl in dem Sender als auch dem Empfänger gespeichert werden. Die Synchronisierungskanäle sind vorzugsweise in zwei unterschiedlichen Frequenzbändern angelegt. Beispielsweise können die Frequenzen 863,650 MHz und 869,525 MHz verwendet werden.

Um sicherzustellen, dass eine Kommunikation auf einem Synchronisierungskanal stets in einem Empfänger empfangen wird, wird ferner vorgeschlagen, dass der Empfänger auf jeweils einem aus allen festen Synchronisierungskanälen lauscht. Ein Lauschen kann bedeuten, dass der Empfänger den entsprechenden Kanal überwacht ob eine Präambel oder Nutzdaten auf diesem Kanal übertragen werden. Das Lauschen auf allen der festen Synchronisierungskanälen soll gegenständlich derart sein, dass innerhalb eines Scanintervalls auf allen Synchronisierungskanälen gelauscht wurde. Das bedeutet, dass ein Empfänger nacheinander die Synchronisierungskanäle durchläuft und kurzfristig lauscht, ob auf dem jeweiligen Kanal Funkverkehr herrscht. Gegebenenfalls ist in dem Funkverkehr eine Präambel vorhanden, anhand derer der Empfänger feststellen kann, dass Nutzdaten folgen.

Das Lauschen erfolgt jeweils innerhalb eines Scanintervalls über alle festen Synchronisierungskanäle. Vorzugsweise ist ein Scanintervall 5ms lang. Innerhalb dieses Scanintervalls lauscht der Empfänger nacheinander, beispielsweise jeweils 75µs bzw. 115µs oder auch 250µs, auf jedem einzelnen der Synchronisierungskanäle. Der Dauer des Lauschens kann von der Datenrate abhängig sein. Da der PLL des Empfängers mit der Burst-Präambel synchronisiert wird, ist es notwendig, diese Synchronisation sicherzustellen. Da die Dauer der Synchronisation abhängig von der Bitrate ist, wird vorgeschlagen, die Dauer des Lauschens in Abhängigkeit von der Bitrate zu gestalten.

Die Länge des Scanintervalls ist ebenfalls variabel. Vorzugsweise dauert ein Scanintervall 5ms. Doch wird die Dauer des Scanintervalls vorzugsweise abhängig von der Geschwindigkeit des Empfängers, zwischen zwei Kanälen zu springen (Hop-Zeit), der Anzahl der Kanäle und der Sauer des Lauschens auf einem Kanal bestimmt.

Sobald senderseitig ein Ereignis detektiert wurde, sendet dieser eine Präambel aus. Hierzu wählt der Sender einen der gespeicherten Synchronisierungskanäle aus. Die Präambel wird gefolgt von den Nutzdaten, mit deren Hilfe durch das Ereignis bedingte Nutzdaten übertragen werden können.

Um sicherzustellen, dass empfängerseitig die Präambel auch tatsächlich empfangen wird, wird vorgeschlagen, dass die

Präambel zumindest die doppelte Länge des Scanintervalls hat. Demzufolge sendet der Sender unmittelbar nach einem Ereignis eine Präambel aus, die doppelt so lang ist, wie das Scanintervall, im gegebenen Beispiel beispielsweise 10ms. Eine Präambel kann vorzugsweise eine Bitfolge 10101010... sein. Vorzugsweise ist die Präambel eineindeutig. Eine Bitfolge, die der Präambel entspricht, ist vorzugsweise in den Nutzdaten nicht enthalten. Hierzu kann ein Mechanismus vorgesehen sein, der eine solche Bitfolge in den Nutzdaten verhindert.

Durch das gegenständliche Verfahren ist es für einen Sender möglich, stets unmittelbar nach einem Ereignis Nutzdaten an den entsprechenden Empfänger zu übermitteln, ohne Kenntnis über aktuelle Datenkanäle zu haben. Durch die Verwendung von mehreren Synchronisierungskanäle ist sichergestellt, dass ein Duty-Cycle auf einem jeweiligen Kanal unter 1% liegt und somit Konformität mit der ETSI Norm EN 300 220-1 besteht.

Gemäß einem Ausführungsbeispiel wird vorgeschlagen, dass zumindest zwei zur Inklusion von Geräten zum System zur Heimautomatisierung verwendete Kanäle zu Synchronisierungskanälen bestimmt werden. Zum Beginn eines Betriebs eines Systems zur Heimautomatisierung ist es notwendig, Sender als auch Empfänger in das System einzubinden. Hierzu melden diese sich regelmäßig an einem zentralen Steuerrechnern (SmartHome Controller SHC) an. Dieses Anmelden wird auch Inklusion genannt. Bei der Inklusion tauschen die Geräte mit dem zentralen Steuerrechner Netzwerkschlüssel aus. Da die Inklusion für unprogrammierte Geräte möglich sein muss, ist bevorzugt, wenn zwei Funkkanäle als Synchronisierungskanäle vorgesehen sind, die fest in die Geräte programmiert sind. Somit kann in den Geräten bereits im Auslieferungszustand die Funkfrequenz der beiden zur Inklusion verwendeten Synchronisierungskanäle vorhanden sein. Da die Inklusion im Betrieb eines Heimautomatisierungssystem sehr selten stattfindet, sind die beiden zur Inklusion vorgesehenen Synchronisierungskanäle nur wenig genutzt, so dass es sinnvoll ist, diese Synchronisierungskanäle auch gegenständlich zu verwenden.

Gemäß einem Ausführungsbeispiel wird vorgeschlagen, dass zumindest zwei durch einen zentralen Steuerrechner ausgewählte Kanäle zu Synchronisierungskanälen bestimmt werden. Auch kann nur zumindest ein weiterer Synchronisierungskanal durch den zentralen Steuerrechner bestimmt werden. Wenn nachfolgend von Synchronisierungskanälen die Rede ist, ist stets die Einzahl mit gemeint. Neben den Synchronisierungskanälen, die den für die Inklusion verwendete Funkkanälen entsprechen, können zumindest zwei weitere Synchronisierungskanäle von dem zentralen Steuerrechner bestimmt werden. Welche Kanäle dies sind, kann davon abhängen, ob der zentrale Steuerrechner Kenntnis über Störungen im lokalen Frequenzband hat und die Synchronisierungskanäle so auswählt, dass diese möglichst in störungsfreien Frequenzbändern liegen. Die zwei weiteren durch den Steuerrechner bestimmten Synchronisierungskanäle sind vorzugsweise ebenfalls im Betrieb fest und werden während Inbetriebnahme des zentralen Steuerrechners festgelegt. Anschließend erfolgt keine Änderung der zumindest zwei weiteren Synchronisierungskanäle bzw. deren Frequenzen, so dass alle Geräte, die mit dem zentralen Steuerrechner verbunden sind, Kenntnis über alle Synchronisierungskanäle haben.

Gemäß einem Ausführungsbeispiel wird vorgeschlagen, dass die Synchronisierungskanäle von einem zentralen Steuerrechner an den Sender und/oder den Empfänger bei einer Inklusion des Systems zur Heimautomatisierung übermittelt werden. Wie bereits erläutert, können die weiteren Synchronisierungskanäle zu Beginn der Inbetriebnahme eines zentralen Steuerrechners durch diesen festgelegt werden. Melden sich anschließend Sender bzw. Empfänger bei dem zentralen Steuerrechner an und werden in das System zur Heimautomatisierung inkludiert, kann im Inklusionsmechanismus vorgesehen sein, dass die zu inkludierenden Geräte von dem zentralen Steuerrechner die Information über die weiteren Synchronisierungskanäle erhalten. Diese Information wird dann in den jeweiligen Geräten gespeichert und für den weiteren Betrieb verwendet.

Der Sender muss zumindest einen der Synchronisierungskanäle kennen, da dieser ereignisgesteuert zumindest einem Präambel und die Nutzdaten senden soll. Der Empfänger muss alle Synchronisierungskanäle kennen, da dieser innerhalb eines Scanintervalls auf allen festgelegten Synchronisierungskanälen jeweils zumindest einmal lauschen muss. Hierdurch wird sichergestellt, dass eine Kommunikation zwischen einem Sender und einem Empfänger stets innerhalb eines Synchronisierungsintervalls etabliert werden kann.

Gemäß einem Ausführungsbeispiel wird vorgeschlagen, dass der Sender ereignisgesteuert aus einem Schlafmodus in einen Funkmodus versetzt wird. Ein Ereignis kann eine Nutzeraktion an dem Sender sein. Beispielsweise ist der Sender ein Sensor, der Tasteingaben sensiert. Wenn eine Tasteingabe als Ereignis in dem Sender detektiert wurde, kann der Sender aus dem Schlafmodus in den Funkmodus wechseln. Ein Schlafmodus ist vorzugsweise ein solcher Modus, in dem der Mikroprozessor des Senders inaktiv ist und lediglich Kernfunktionen, wie beispielsweise der Zeitgeber des Transceivers, aktiv sind. Dieser Schlafmodus zeichnet sich durch einen besonders energiesparenden Betrieb aus. Im Funkmodus kann der Sender Rechenoperationen durchführen und der Mikroprozessor des Senders ist aktiv. Im Funkmodus kann der Sender über verschiedene Kanäle Präambeln und Nutzdaten aussenden.

Wurde ein Ereignis detektiert, wird der Sender in den Funkmodus versetzt. Anschließend ermittelt der Sender, was für Daten abhängig von dem Ereignis, welches detektiert wurde, gesendet werden müssen. Diese Daten werden zusammen mit der Präambel versendet. Hierbei werden die Präambel und anschließend die Nutzdaten auf einem der Synchronisierungskanäle gesendet. Da die Präambel eine Länge von zumindest dem zweifachen des Scanintervalls hat, ist es unerheblich, auf welchem der Synchronisierungskanäle diese gesendet wird. Durch das Lauschen des Empfängers auf allen Synchronisierungskanälen nacheinander innerhalb eines Scanintervalls ist sichergestellt, dass die Präambel von dem Empfänger tatsächlich empfangen wird. Dadurch kann der Sender sicher sein, dass die an die Präambel sich anschließenden Nutzdaten von dem adressierten Empfänger tatsächlich empfangen werden.

Um eine schnellere Reaktionszeit innerhalb des Systems zur Heimautomatisierung zu gewährleisten, wird vorgeschlagen, dass senderseitig durch das Ereignis bestimmte Nutzdaten unmittelbar im Anschluss an das Ereignis gesendet werden. Dies bedeutet, dass der Sender nicht auf einen "Beacon" oder dergleichen eines Steuerrechners warten muss oder darauf warten muss, dass ein Zeitschlitz oder eine Frequenz für ihn freigegeben ist. Vielmehr kann der Sender unmittelbar auf einem der Synchronisierungskanäle die Präambel zusammen mit den Nutzdaten aussenden und es ist sichergestellt, dass der Empfänger, der adressiert ist, diese Daten auch empfängt.

Gemäß einem Ausführungsbeispiel wird vorgeschlagen, dass senderseitig die Verfügbarkeit des Synchronisierungskanals geprüft wird. Das Prüfen der Verfügbarkeit kann nach einem CSMA-CA Verfahren erfolgen. Hierbei kann senderseitig zunächst überprüft werden, ob Funkverkehr auf einem der Synchronisierungskanäle herrscht. Wenn auf allen Synchronisierungskanälen kein Funkverkehr herrscht und der letzte Funkverkehr, der detektiert wurde, mindestens 5ms her ist, kann der Sender einen der Synchronisierungskanäle auswählen. Nach dem Auswählen wird nochmals überprüft, ob der ausgewählte Synchronisierungskanal frei ist. Ist dies der Fall, wird die Präambel zusammen mit den Nutzdaten gesendet. Wenn einer der Synchronisierungskanäle belegt ist, wird überprüft, ob die auf dem Funkkanal empfangenen Daten solche des Systems zur Heimautomatisierung sind. Ist dies nicht der Fall, wird der entsprechende Synchronisierungskanal für eine bestimmte Zeit als belegt qualifiziert.

Ist der detektierte Verkehr ein Funkverkehr des Systems zur Heimautomatisierung, wird überprüft, ob die Quelladresse der auf dem Synchronisierungskanal vorhandenen Daten der Zieladresse der zu sendenden Nutzdaten entspricht. Ist dies der Fall, wird der Kanal und auch der Empfänger zunächst eine bestimmte Zeit als belegt qualifiziert.

Ebenfalls wird der entsprechende Synchronisierungskanal für eine bestimmte Zeit als belegt qualifiziert, wenn die Zieladresse des Funkverkehrs der Zieladresse der zu sendenden Nutzdaten entspricht. Gleichzeitig wird der Empfänger als belegt qualifiziert.

Wenn die Zieladresse des Funkverkehrs der Adresse des Senders entspricht, wird der Kanal als belegt qualifiziert und gleichzeitig wird der Funkverkehr in dem Sender empfangen und anschließend ausgewertet.

Wenn keine gültige Adresse in dem Funkverkehr detektiert werden konnte, wird der entsprechende Synchronisierungskanal für eine bestimmte Zeit als blockiert qualifiziert.

Abhängig von diesem Zugriffsalgorithmus wird senderseitig vorzugsweise die Verfügbarkeit des Synchronisierungskanals geprüft. Ein Synchronisierungskanal, der als verfügbar qualifiziert wurde, wird dann dazu genutzt, zunächst die Präambel und anschließend die durch das Ereignis bestimmten Nutzdaten zu senden. Durch die Verfügbarkeitsprüfung wird sichergestellt, dass Funkkollisionen auf den Synchronisierungskanälen weitestgehend vermieden werden.

Gemäß einem Ausführungsbeispiel wird vorgeschlagen, dass von einem zentralen Steuerrechner dynamisch wechselnde Datenkanäle neben den Synchronisierungskanälen bestimmt werden. Die Kommunikation zwischen Geräten des Systems zur Heimautomatisierung, die Kenntnis über Datenkanäle haben, kann über die Datenkanäle abgewickelt werden. Lediglich bei solchen Geräten, die keine Kenntnis über aktuelle Datenkanäle haben, kann die Kommunikation gegenständlich über die Synchronisierungskanäle erfolgen. Die Datenkanäle können dynamisch im Betrieb geändert werden, um zum Einen Störungen im Frequenzband entgegenzuwirken und zum Anderen Vorgaben durch ETSI Normen, beispielsweise von max. 1% Duty-Cycle, zu erfüllen.

Der zentrale Steuerrechner kann die Informationen zu den jeweils aktuellen Datenkanälen in einem Broadcast an alle Geräte übermitteln. Jedoch solche Geräte, die sich im Moment eines solchen Broadcasts im Schlafmodus befinden, empfangen diese Informationen nicht. Auch ist es möglich, dass ein Gerät, welches in einem Schlafmodus ist, zuvor Informationen zu aktuellen Datenkanälen empfangen hat. Während des Schlafmodus dieses Gerätes können sich diese Informationen jedoch verändern, so dass nach dem Aufwachen aus dem Schlafmodus der Sender sich nicht darauf verlassen kann, dass die zuvor empfangenen Informationen zu den Datenkanälen aktuell sind. Aus diesem Grunde wird der Sender vorzugsweise unmittelbar nach einem Schlafmodus stets die ihm bekannten Synchronisierungskanäle verwenden, um Nutzdaten zu übertragen.

Geräte, die energetisch fremdgespeist sind, beispielsweise Aktoren, die an die Stromversorgung ("Mains Powered") angeschlossen sind, können stets im Funkbetrieb bleiben und können somit die Informationen über die aktuellen Datenkanäle empfangen.

Gemäß einem Ausführungsbeispiel wird vorgeschlagen, dass der Empfang von Nutzdaten durch eine Bestätigungsnachricht auf demselben Synchronisierungskanal, auf dem die Nutzdaten empfangen wurden, bestätigt wird. Ein Empfänger kann, nachdem er die Präambel detektiert hat, in den Nutzdaten überprüfen, ob diese für ihn bestimmt sind.

Dies kann er dadurch tun, dass er zunächst seinen PLL anhand der Burst-Präambel synchronisiert. Anschließend kann der Empfänger die Synchronisierungsbitfolge, die zu der Burst Präambel unterschiedlich ist, auswerten und aus der Synchronisierungsbitfolge eine Netzwerkadresse ermitteln. Dabei kann der Empfänger die in der Synchronisierungsbitfolge enthaltene Zieladresse auswerten und überprüfen, ob diese mit seiner Adresse übereinstimmt. Ist dies der Fall, kann der Empfänger die sich daran anschießenden Nutzdaten empfangen und auswerten. Ein Empfang von Nutzdaten wird vorzugsweise durch den Empfänger auf dem selben Synchronisierungskanal bestätigt, auf dem dieser diese empfangen hat. Das Bestätigen kann in einer Bestätigungsnachricht erfolgen, die Informationen über beispielsweise eine Nutzdatenpaketnummer enthält. Hierdurch kann der Sender sicherstellen, dass das richtige Paket im Empfänger empfangen wurde. Somit muss der Sender, nachdem er die Nutzdaten gesendet hat, noch eine Weile auf dem Synchronisierungskanal lauschen, ob eine Bestätigungsnachricht gesendet wird.

In der Bestätigungsnachricht kann gemäß einem Ausführungsbeispiel eine Information zu den aktuellen Datenkanälen enthalten sein. Somit wird der Sender, nachdem er auf dem Synchronisierungskanal Nutzdaten übermittelt hat, mit der Bestätigungsnachricht über die aktuellen Datenkanäle informiert. Sind, nachdem die Nutzdaten in einem ersten Datenpaket übermittelt wurden und die Bestätigungsnachricht empfangen wurde, weitere Daten mit dem Empfänger oder anderen Geräten auszutauschen, kann dieser Datenaustausch auf zumindest einem der Datenkanäle erfolgen. Somit kann beispielsweise das erste oder einige der ersten Datenpakete, die Nutzdaten enthalten, auf dem Synchronisierungskanal übertragen werden und anschließend kann eine Kommunikation auf die Datenkanäle wechseln.

Beispielsweise kann bei einem Ereignis eine Kommunikation nicht nur mit einem einzigen Empfänger erforderlich sein, sondern mit mehreren. In diesem Fall kann beispielsweise auf einem Synchronisierungskanal zunächst ein erster Satz von Nutzdaten übertragen werden, der für einen ersten Empfänger bestimmt ist. Dieser erste Empfänger kann den Empfang bestätigen und den Sender über die aktuellen Datenkanäle informieren. Anschließend können weitere Nutzdaten an den gleichen oder weitere Empfänger auf den Datenkanälen übertragen werden. Dies stellt sicher, dass die Synchronisierungskanäle möglichst für Kommunikation von aus dem Schlafmodus aufwachende Sender freigehalten werden.

Gemäß einem Ausführungsbeispiel wird vorgeschlagen, dass senderseitig zunächst überprüft wird, ob im Sender Informationen zu aktuellen Datenkanälen vorhanden sind und gegebenenfalls senderseitig durch das Ereignis bestimmte Nutzdaten zunächst auf dem aktuellen Datenkanal gesendet werden. Wie bereits ausgeführt, kann der Sender beispielsweise von dem Empfänger in einer Bestätigungsnachricht Informationen zu den aktuellen Datenkanälen erhalten. Wenn diese vorhanden sind, kann der Sender diese verwenden, um Nutzdaten auszusenden.

Auch ist es möglich, dass ein Sender Informationen zu Datenkanälen gespeichert hat und beispielsweise von einem Steuerrechner ausgesendete neuere Informationen zu aktuellen Datenkanälen, z.B. aufgrund von Funkstörungen, nicht empfangen hat. In diesem Fall ist der Sender der Auffassung, dass er Informationen zu den aktuellen Datenkanälen hat. Somit ist es möglich, dass der Sender auf einem die ihm bekannten Datenkanäle seine Nutzdaten sendet. Da der Sender der Auffassung ist, dass die Datenkanäle aktuell sind wartet auf eine Bestätigungsnachricht vom Empfänger. Bleibt die Bestätigungsnachricht aus, kann der Sender die Nutzdaten anschließend zusammen mit der Präambel auf einem der Synchronisierungskanäle übertragen und somit sicherstellen, dass die Nutzdaten bei dem Empfänger auch ankommen.

Vorteilhaft lässt sich das beschriebene System einsetzen, wenn der Sender energetisch eigengespeist ist. Eine energetische Eigenspeisung kann durch Batterien, Kondensatoren oder Akkumulatoren erfolgen. Ein energetisch eingespeister Sender verfügt über einen Schlafmodus und einen Funkmodus. Im Schlafmodus ist der Mikroprozessor im Wesentlichen inaktiv, so dass Energie eingespart wird. Im Funkmodus können Rechenoperationen durchgeführt werden als auch Nutzdaten und Präambeln auf Funkkanälen ausgesendet werden.

Der Empfänger kann energetisch fremdgespeist sein, beispielsweise "Mains Powered" sein. Es ist jedoch ebenfalls denkbar, dass der Empfänger energetisch eigengespeist ist. Beispielsweise ein Heizkörperthermostat kann als energetisch eigengespeister Empfänger agieren.

Die zuvor genannten Verfahren können auch als Computerprogramme oder als auf einem Speichermedium gespeichertes Computerprogramm realisiert sein. Hierbei kann senderseitig, empfängerseitig und/oder serverseitig ein Mikroprozessor zur Durchführung der jeweiligen Verfahrensschritte durch ein Computerprogramm programmiert sein.

Die Merkmale der Verfahren und Vorrichtung sind frei miteinander kombinierbar. Insbesondere können Merkmale der Beschreibung und/oder der abhängigen Ansprüche, auch unter vollständiger oder teilweise Umgehung von Merkmalen der unabhängigen Ansprüche, in Alleinstellung oder frei miteinander kombiniert eigenständig erfinderisch sein. Auch die in der Beschreibungseinleitung genannten Merkmale lassen sich in erfinderischer Weise mit den Merkmalen der unabhängigen und abhängigen Ansprüche kombinieren.

Nachfolgend wir der Gegenstand anhand einer Ausführungsbeispiele zeigenden Zeichnung näher erläutert. In der Zeichnung zeigen:
- Fig. 1: schematisch ein Gerät, dass als Sensor gebildet ist;
- Fig. 2: schematisch ein Gerät, dass als Aktor gebildet ist;
- Fig. 3: einen schematischen Aufbau eines Heimautomatisierungssystems;
- Fig. 4: einen schematischen Betrieb eines Senders auf Synchronisierungskanälen;
- Fig. 5: einen schematischen Betrieb eines Empfängers auf den Synchronisierungskanälen;
- Fig. 6: einen Zugriffsmechanismus zum Zugriff auf einen Synchronisierungskanal.

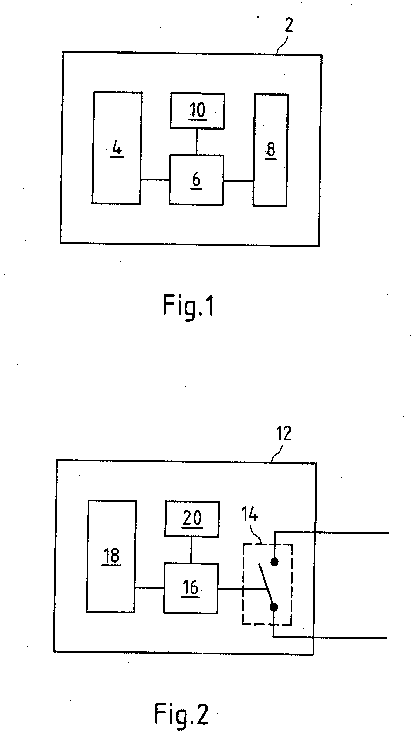

Fig. 1 zeigt schematisch einen Sensor 2 mit einem Tasterfeld 4, welches als Eingang zum Detektieren von Ereignissen verwendet wird. In dem Sensor 2 ist darüber hinaus ein Prozessor 6 angeordnet, zum Auswerten der detektierten Ereignisse an dem Tasterfeld 4. In dem Sensor 2 ist auch eine Funkschnittstelle 8 vorgesehen, welche über den Prozessor 6 angesteuert wird. Mittels der Funkschnittstelle 8 ist es möglich, über ein Funkprotokoll Nachrichten auszusenden und zu empfangen. Die Funkschnittstelle 8 ermöglicht eine Kommunikation über eine Luftschnittstelle. Mittels der Funkschnittstelle 8 ist eine Kommunikation nach einem Verfahren, wie es beansprucht ist, und nachfolgend beschrieben wird, möglich.

Ferner ist in dem Sensor 2 ein Speicher 10 angeordnet. In dem Speicher 10 können temporäre Schlüssel und Netzwerkschlüssel gespeichert werden. Mit Hilfe des Sensors 2 ist es möglich, Ereignisse zu erfassen und in entsprechende Nachrichten umzusetzen. In dem Speicher können auch Informationen zu den Synchronisierungskanälen und Datenkanälen abgespeichert sein. Der Speicher ist vorzugsweise nicht flüchtig.

Der Sensor 2 ist energetisch eigengespeist und ist regelmäßig in einem Schlafmodus. Nur bei einem Ereignis wacht der Sensor 2 auf und überträgt Nutzdaten nach einem gegenständlichen Verfahren, wie nachfolgend beispielhaft beschrieben. Der Sensor 2 kann aber auch ein Nachrichtenempfänger sein, so dass der Sensor 2 auch während des Schlafmodus regelmäßig in einem Scanintervall überprüft, ob über eine Präambel gesendet wird.

Fig. 2 zeigt einen Aktor 12. Der Aktor 12 weist einen Ausgang 14 auf, über den beispielsweise elektrische Verbraucher gesteuert werden können. Zu erkennen ist, dass in dem dargestellten Beispiel der Ausgang 14 mit einem Schalter verbunden ist, über den elektrische Kontakte am Ausgang 14 geschlossen oder getrennt werden können. Der Ausgang 14 bzw. der Schalter wird über einen Prozessor 16 angesteuert, der ebenfalls in dem Aktor 12 angeordnet ist. Der Prozessor 16 ist mit einer Funkschnittstelle 18 verbunden. Über die Funkschnittstelle 18 können Daten über die Luftschnittstelle beispielsweise mit der Funkschnittstelle 18 als auch mit einem zentralen Server ausgetauscht werden. Die Funkschnittstelle 18 ermöglichst es dem Aktor 12, Daten zu senden und zu empfangen.

Der Aktor 12 ist energetisch fremdgespeist und ist regelmäßig in einem Funkmodus. In dem Funkmodus empfängt der Aktor 12 Daten auf den Datenkanälen. Der Aktor 12 überwacht zusätzlich die Synchronisierungskanäle.

Für den Fall, dass der Empfang von gesendeten Nutzdaten von dem Empfänger gegenüber dem Sender nicht bestätigt werden, wird im Sender ein Resend Mechanismus ausgelöst, der bewirkt, dass die Nutzdaten nach einer gewissen Zeit erneut gesendet werden.

Schließlich ist in dem Aktor 12 ein Speicher 20 angeordnet, in dem temporäre Schlüssel und Netzwerkschlüssel sowie Informationen zu Datenkanälen und Synchronisierungskanälen gespeichert sein können.

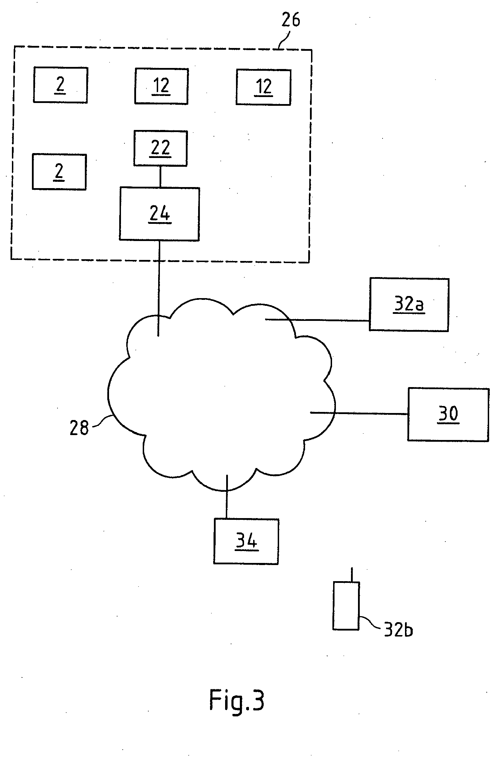

Die in Fig. 1 und 2 gezeigten Sensoren 2 und Aktoren 12 lassen sich in einem in Fig. 3 gezeigte Heimautomatisierungssystems einsetzen. Fig. 3 zeigt beispielsweise die Umgebung 26 eines Hauses oder einer Wohnung. In dieser Umgebung 26 ist ein Router 24 vorgesehen, der eine Kommunikationsverbindung mit dem Internet 28 zur Verfügung stellt und Datenpakete in das Internet 28 aussendet und aus dem Internet 28 empfangen kann. An den Router 24 ist ein Server 22 (Smart Home Controller SHC) angeschlossen. Über den Router 24 kann der SHC 22 Datenpakete mit dem Internet 28 austauschen. Der SHC 22 kann über eine Funkverbindung eine Kommunikation mit den Sensoren 2 als auch den Aktoren 12 aufbauen. Die Kommunikation kann bidirektional sein und auf Anforderungen erfolgen.

An das Internet 28 ist eine zentrale Verwaltungseinheit 30 angeschlossen. Die zentrale Verwaltungseinheit 30 kann über das Internet 28 und den Router 24 eine Kommunikation mit dem SHC 22 aufnehmen, um beispielsweise eine Konfiguration der Sensoren 2, der Aktoren 12 oder des SHCs 22 vorzunehmen.

Die Konfiguration des SHCs 22 als auch der Sensoren 2 und der Aktoren 12 über das Internet 28 kann beispielweise von einem privaten Personalcomputer 32a erfolgen. Hierzu kann der Personalcomputer 32a beispielsweise eine Verbindung über das Internet 28 mit der zentralen Verwaltungseinheit 30 aufbauen und mittels der zentralen Verwaltungseinheit 30 eine Konfiguration des SHCs 22, des Sensors 2 oder des Aktors 12 vornehmen. Diese Konfigurationsänderung kann dann über das Internet 28 von der zentralen Verwaltungseinheit 30 über den Router 24 zu dem SHC 22 übermittelt werden. Auch kann eine Konfiguration beispielsweise über ein Mobiltelefon 32b erfolgen, wobei das Mobiltelefon 32b über einen Gateway 34 mit dem Internet 28 verbunden ist und über das Gateway 34 eine Verbindung mit der zentralen Verwaltungseinheit 30 aufnehmen kann.

Eine sichere Kommunikation zwischen dem SHC 22 und der zentralen Verwaltungseinheit 30 kann beispielsweise dadurch gewährleistet sein, dass der SHC 22 mittels des Routers 24 einen Kommunikationstunnel durch das Internet 28 mit der zentralen Verwaltungseinheit 30 aufbaut, sobald der SHC 22 mit dem Router 24 verbunden wird. Hierzu muss der SHC 22 lediglich die feste IP-Adresse der zentralen Verwaltungseinheit 30 kennen und mittels eines Kennworts und eines Schlüssels die Kommunikation mit der zentralen Verwaltungseinheit 30 verschlüsseln. Über diese verschlüsselte Verbindung kann nun von der zentralen Verwaltungseinheit 30 eine Konfiguration des SHCs 22, des Sensors 2 als auch des Aktors 12 erfolgen. Die Konfiguration kann von dem Personalcomputer 32a oder dem Mobiltelefon 32b gesteuert werden. Auch ist es möglich, mittels des Personalcomputers 32a als auch des Mobiltelefons 32b Ereignisse am Sensor 2 zu generieren, um somit bestimmte Aktionen der Aktoren 12 auszulösen. Auch können Status von den Sensoren 2 und den Aktoren 12 so abgefragt werden.

Die Kommunikation zwischen SHC 22, Aktoren 12 und Sensoren 2 ermöglicht zum Einen die Konfiguration der Sensoren 2 und der Aktoren 12 als auch die Steuerung von an den Aktor 12 angeschlossenen elektrischen Verbrauchern mittels der Sensoren 2. Die Aktor-Steuerung wird durch Verknüpfungen zwischen einem Sensor 2 und Aktoren 12 als auch durch Sensor-Parameter und/oder Aktor-Parameter reguliert.

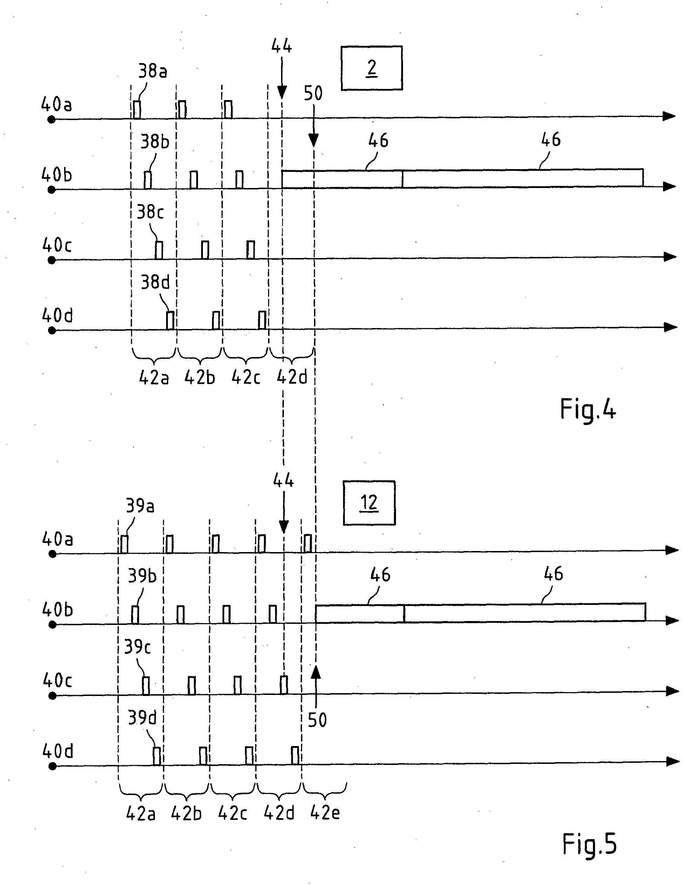

Die Figuren 4 und 5 zeigen den Zugriff von Sendern bzw. Empfängern auf die Synchronisierungskanäle. Zunächst sei angemerkt, dass ein Sender bzw. ein Empfänger lediglich hinsichtlich eines bestimmten Ereignisses als solcher zu bezeichnen ist. Ein Sensor 2, der beispielsweise ein Tastsensor ist, kann bei einem benutzergesteuerten Ereignis, z.B. das Drücken einer Taste, zu einem Sender werden. Der entsprechende Aktor 12, der zum Schalten der Lampe mit einem Schaltrelais verbunden ist, kann in diesem Fall zu einem Empfänger werden. Der Sensor 2, der bei einem benutzergesteuerten Ereignis ein Sender wird, kann jedoch ebenfalls ein Empfänger sein, beispielsweise ein Empfänger einer Konfigurationsnachricht von einem zentralen Steuerrechner. Insofern ist es auch möglich, dass alle Geräte, also auch die energetisch eigengespeisten, unabhängig davon, ob sie Sensoren 2 oder Aktoren 12 sind, gegenständlich auf jeweils allen Synchronisierungskanälen innerhalb eines Scanintervalls lauschen. Dies ist auch in den Figuren 4 und 5 gezeigt und wird nachfolgend noch beschrieben.

Auch ist es möglich, dass jedes Gerät vom zentralen Steuerrechner 22 die Informationen zu den aktuellen Datenkanälen abrufen kann. Hierzu kann ein Gerät z.B. unter Verwendung eines der Synchronisierungskanäle eine Präambel, die die doppelte Länge des Scanintervalls hat, absenden. Im Anschluss an diese Präambel kann in den Nutzdaten eine Anforderung an den zentralen Steuerrechner 22 enthalten sein, Informationen zu den aktuellen Datenkanälen auf demselben Synchronisierungskanal zu übertragen. Durch die Antwort des SHC 22 auf diese Anforderung hat das Gerät Informationen zu den aktuellen Datenkanälen und kann weitere Nutzdaten mit weiteren Geräten über die nun bekanten Datenkanäle austauschen.

Fig. 4 zeigt den zeitlichen Verlauf des Zugriffs auf einen von vier Synchronisierungskanälen 40 (40a, 40b, 40c, 40d).

Die beiden Synchronisierungskanäle 40a, 40b können beispielsweise Synchronisierungskanäle 40 sein, die fest programmiert sind und zu Inklusion der Geräte in das System zur Heimautomatisierung verwendet werden. Die beiden Synchronisierungskanäle 40c, 40d können durch den zentralen Steuerrechnen 22 bestimmte Kanäle sein, die bei der Inbetriebnahme des System zur Heimautomatisierung durch den zentralen Steuerrechner 22 festgelegt werden. Die Informationen zu den Frequenzen der Synchronisierungskanäle 40 sind in den Sensoren 2 als auch den Aktoren 12 gespeichert. Diese Informationen können während der Inklusion dieser Geräte 2, 12 in das System zur Heimautomatisierung mitgeteilt werden.

Fig. 4 zeigt den Zugriff eines Sensors 2 auf die Synchronisierungskanäle 40a - 40d. Der Zugriff erfolgt z.B. sowohl lauschend als auch sendend. Zunächst sind drei Scanintervalle 42 (42a, 42b, 42c) dargestellt. Innerhalb eines jeden der Scanintervalle 42 lauscht der Sensor 2 zu den Zeitpunkten 38 (38a, 38b, 38c, 38d) auf jeweils einem der Synchronisierungskanäle 40. Während der Lauschens 38 überprüft der Sensor 2, ob Funkverkehr auf dem entsprechenden Synchronisierungskanal 40 vorhanden ist und gegebenenfalls, ob dieser Funkverkehr für den Sensor 2 adressiert ist. Dieses Lauschen 38 auf den Synchronisierungskanälen 40 kann durch jeden Sensor 2 durchgeführt werden. Es ist jedoch nicht zwingend erforderlich, dass dies erfolgt, insbesondere aus Energiespargründen kann auf dieses Lauschen 38 durch einen Sensor 2 verzichtet werden.

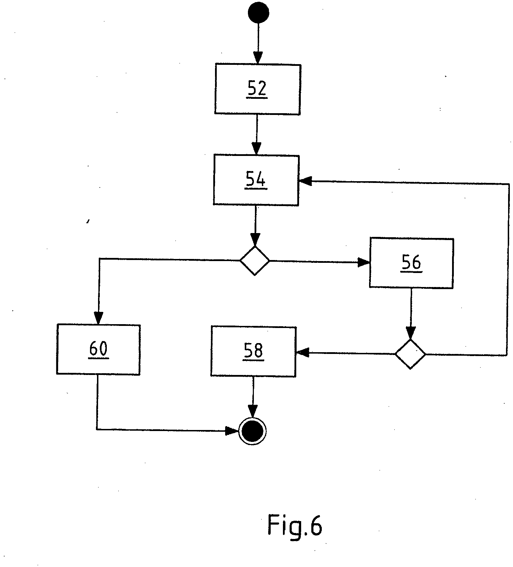

Zu einem beliebigen Zeitpunkt kann beispielsweise ein benutzergesteuertes Ereignis 44 eintreten, welches es erfordert, dass der Sensor 2 Nutzdaten 48 an einen Empfänger sendet. Sobald das Ereignis 44 an dem Sensor 2 detektiert wurde, greift der Sensor 2 auf einen der Synchronisierungskanäle 40 zu, im gezeigten Beispiel auf den Synchronisierungskanal 40b. Der Zugriff auf einen solchen Synchronisierungskanal ist mittels CSMA-CA entsprechend der Fig. 6, welche nachfolgend noch beschrieben wird, geregelt.

Unmittelbar im Anschluss an das Ereignis 44 sendet der Sensor 2 eine Präambel 46 auf dem gewählten Synchronisierungskanal 40b aus. Die Dauer der Präambel 46 ist zumindest doppelt so lang wie ein Scanintervall 42. Im Anschluss an die Präambel 46 sendet der Sensor 2 auf dem gewählten Synchronisierungskanal 40b Nutzdaten 48 aus. Die Nutzdaten 48 können durch das Ereignis 44 bestimmt sein und sind an einen bestimmten Empfänger oder eine Gruppe von Empfängern adressiert.

Der Sensor 2 kennt in dem Moment des Ereignis 44 lediglich die Synchronisierungskanäle 40. Informationen zu aktuellen Datenkanälen hat der Sensor 2 nicht. Dadurch, dass der Sensor 2 die Präambel 46 mit einer Länge aussendet, die mindestens doppelt so lang ist, wie ein Scanintervall 42, stellt der Sensor 2 jedoch sicher, dass die Nutzdaten 48 von dem adressierten Empfänger empfangen werden. Dies wird in der Fig. 5 deutlich.

Wie in der Fig. 5 gezeigt, lauscht ein Aktor 12 ebenfalls auf den Synchronisierungskanälen 40 was durch die Impulse 39 (39a, 39b, 39c, 39d) dargestellt ist. Das Scanintervall 42 in dem Aktor 12 ist genauso lang, wie das Scanintervall 42 in dem Sensor 2. Es ist jedoch nicht erforderlich, dass die Scanintervalle 42 zu gleichen Zeiten in dem Sensor 2 und dem Aktor 12 beginnen. Es wird lediglich festgelegt, wie lang ein solches Scanintervall 42 ist. Diese Länge wird durch alle Geräte innerhalb des Systems zur Heimautomatisierung eingehalten. Während eines Scanintervalls 42 lauscht somit der Aktor 12 jeweils zumindest einmal auf jedem der Synchronisierungskanäle 40.

Zu erkennen ist, dass im Zeitpunkt des Ereignisses 44 der Aktor 12 gerade auf dem Synchronisierungskanal 40c lauscht und im Anschluss daran auf dem Synchronisierungskanal 40d. Wie in der Fig. 4 zu erkennen, sendet der Sensor 2 die Präambel jedoch auf dem Synchronisierungskanal 40b. Somit wird zu Beginn der Präambel 46 diese durch den Aktor 12 nicht detektiert. Zum Zeitpunkt 50 lauscht der Aktor 12 im Scanintervall 42e jedoch auf dem Synchronisierungskanal 40b und empfängt einen Teil der Präambel 46. Da die Präambel 46 doppelt so lang ist wie ein Scanintervall 42, ist sichergestellt, dass der Aktor 12 die Präambel 46 bzw. ein Teil davon tatsächlich innerhalb eines Scanintervalls 42 empfängt.

Der Aktor 12 lauscht, nachdem er auf dem Synchronisierungskanal 40b ein Teil der Präambel 46 empfangen hat, nur noch auf diesem Synchronisierungskanal 40b und wartet die Nutzdaten 48 ab. Innerhalb der Nutzdaten 48 ist im Anschluss an die Präambel 46 ein Synchronisierungswort vorhanden, um den Aktor 12 zu synchronisieren. Anschließend enthalten die Nutzdaten 48 weitere Informationen, insbesondere Informationen zu dem Ereignis 44 bzw. mit diesem Ereignis 44 verknüpfte Befehle. Der Aktor 12 empfängt somit auf dem Synchronisierungskanal 40b die Nutzdaten 48 und kann diese zur Ausführung von Aktionen verwenden. Im Anschluss an den Empfang der Nutzdaten 48 wird der Aktor 12 eine Bestätigungsnachricht ebenfalls auf dem Synchronisierungskanal 40b übertragen, was nicht weiter dargestellt ist.

Der Sensor 2 lauscht im Anschluss an das Senden der Nutzdaten 48 auf dem Synchronisierungskanal 40, ob er eine Bestätigungsnachricht von dem Aktor 12 auf diesem Funkkanal empfängt. In der Bestätigungsnachricht kann nicht nur der Empfang der Nutzdaten 48 bestätigt werden, sondern auch beispielsweise Informationen zu den aktuellen Datenkanälen, die beispielsweise im Aktor 12 gespeichert sein können. Eine anschließende Kommunikation zwischen dem Sensor 2 und dem Aktor 12 kann, bis der Sensor 2 in einen Schlafmodus wechselt, nun über die im Sensor 2 bekannten aktuellen Datenkanäle erfolgen. Der Sensor 2 kann auch mit anderen Geräten, ebenfalls über die nunmehr bekannten Datenkanäle, kommunizieren.

Der Zugriff auf einen der Synchronisierungskanäle 40 ist CSMA-CA gesichert. Im Moment eines Ereignisses 44 wird in dem Sensor 2 eine neue Nachricht erstellt (52). Im Anschluss daran überprüft der Sensor 2 die Verfügbarkeit eines Synchronisierungskanals (54). Für den Fall, dass kein Synchronisierungskanal frei ist, wartet (56) der Sensor 2 eine bestimmte Zeit und überprüft (54) erneut die Verfügbarkeit der Synchronisierungskanäle 40. Für den Fall, dass eine maximale Wartezeit überschritten ist, wird das Senden der Nachricht verworfen (58). Anderenfalls, falls ein freier Synchronisierungskanal 40 detektiert wird, wird die Nachricht gesendet (60).

Mit Hilfe des beschriebenen Übertragungsverfahrens mittels Synchronisierungskanäle ist es möglich, auch energetisch eigengespeiste Sender zuverlässig in einem System zur Heimautomatisierung zu betreiben. Das Übermitteln von Nachrichten, die insbesondere ereignisgesteuert übermittelt werden müssen, kann zuverlässig zwischen einem Sender und einem Empfänger ermöglicht werden.

## Patentansprüche

1. Verfahren zum Übertragen von Daten von einem Sender an einen Empfänger in einem System zur Heimautomatisierung umfassend:
- Speichern von zumindest zwei fest programmierten Synchronisierungskanälen sowohl in einem Sender (2) als auch einem Empfänger (12), wobei die Synchronisierungskanäle (40a-d) zur Inklusion von Geräten (2, 12) zum System zur Heimautomatisierung verwendet werden,
- Bestimmen von dynamisch wechselnden Datenkanälen neben den Synchronisierungskanälen (40a-d) durch einen zentralen Steuerrechner (22) des Systems zur Heimautomatisierung,- empfängerseitiges Lauschen auf jeweils einem aus allen festen Synchronisierungskanälen (40a-d), so dass innerhalb eines Scanintervalls (42) auf allen Synchronisierungskanälen (40a-d) gelauscht wurde,
- senderseitiges, ereignisgesteuertes Aussenden einer Präambel (46) gefolgt von Nutzdaten (48) auf einem der Synchronisierungskanäle (40a-d), wobei die Präambel (46) zumindest die doppelte Länge des Scanintervalls (42) hat wobei
- der Empfang von Nutzdaten durch eine
Bestätigungsnachricht auf dem selben Synchronisierungskanal (40a-d), auf dem die Nutzdaten empfangen wurden, bestätigt wird,
- in der Bestätigungsnachricht Informationen zu aktuellen Datenkanälen enthalten sind, und
- senderseitig zunächst überprüft wird, ob im Sender Informationen zu aktuellen Datenkanälen vorhanden sind und gegebenenfalls senderseitig durch das Ereignis bestimmte Nutzdaten (48) auf einem aktuellen Datenkanal gesendet werden.

2. Verfahren nach Anspruch 1, **dadurch gekennzeichnet, dass** zumindest zwei durch einen zentralen Steuerrechner (22) ausgewählte Kanäle zu Synchronisierungskanälen (40a-d) bestimmt werden.

3. Verfahren nach einem der vorangehenden Ansprüche, **dadurch gekennzeichnet, dass** die Synchronisierungskanäle (40a-d) von einem zentralen Steuerrechner (22) an den Sender (2) und/oder den Empfänger (12) bei einer Inklusion in das System zur Heimautomatisierung übermittelt werden.

4. Verfahren nach einem der vorangehenden Ansprüche, **dadurch gekennzeichnet, dass** der Sender (2) ereignisgesteuert aus einem Schlafmodus in einen Funkmodus versetzt wird und in dem Funkmodus zunächst die Präambel (46) und anschließenden durch das Ereignis bestimmte Nutzdaten (48) auf einem der Synchronisierungskanäle (40a-d) gesendet werden.

5. Verfahren nach einem der vorangehenden Ansprüche, **dadurch gekennzeichnet, dass** senderseitig durch das Ereignis bestimmte Nutzdaten (48) unmittelbar im Anschluss an das Ereignis gesendet werden.

6. Verfahren nach einem der vorangehenden Ansprüche, **dadurch gekennzeichnet, dass** senderseitig die Verfügbarkeit des Synchronisierungskanals (40a-d), auf dem zunächst die Präambel (46) und anschließenden durch das Ereignis bestimmte Nutzdaten (48) gesendet werden sollen, geprüft wird.

7. Verfahren nach einem der vorangehenden Ansprüche, **dadurch gekennzeichnet, dass** senderseitig nachdem durch das Ereignis bestimmte Nutzdaten (48) auf einem aktuellen Datenkanal gesendet wurden eine Bestätigungsnachricht auf einem Datenkanal abgewartet wird und beim Ausbleiben der Bestätigungsnachricht die Präambel (46) und die Nutzdaten (48) auf einem der Synchronisierungskänale (40a-d) gesendet werden.

8. System zur Heimautomatisierung umfassend:
- zumindest einen Sender (2),
- zumindest einen Empfänger (12),
- zumindest einen zentralen Steuerungsrechner (22), der dynamisch wechselnden Datenkanäle neben den Synchronisierungskanälen (40a-d) bestimmt,
- wobei der Sender (2) und der Empfänger (12) Mittel zur Speicherung von zumindest zwei fest programmierte Synchronisierungskanälen (40a-d) enthalten, wobei die Synchronisierungskanäle (40a-d) zur Inklusion von Geräten (2, 12) zum System zur Heimautomatisierung bestimmt sind,
- wobei der Empfänger (12) Mittel zum Lauschen auf jeweils einem aus allen festen Synchronisierungskanälen (40a-d) enthält, die so ausgestaltet sind, dass innerhalb eines Scanintervalls (42) auf allen Synchronisierungskanälen (40a-d) gelauscht wurde,
- wobei der Sender (2) Mittel zum ereignisgesteuerten Aussenden einer Präambel (26) gefolgt von Nutzdaten (48) auf einem der Synchronisierungskanäle (40a-d) enthält, wobei die Präambel (46) zumindest die doppelte Länge des Scanintervalls (42) hat wobei
- der Empfänger (12) Mittel zur Bestätigung des Empfangs von Nutzdaten (48) durch eine Bestätigungsnachricht auf dem selben Synchronisierungskanal (40a-d), auf dem die Nutzdaten (48) empfangen wurden, enthält, und in der Bestätigungsnachricht Informationen zu aktuellen Datenkanälen enthalten sind, und
- der Sender (2) Mittel zur Überprüfung enthält, Mittel zur Überprüfung enthält, ob im Sender Informationen zu aktuellen Datenkanälen vorhanden sind und der Sender Mittel enthält, die in Abhängigkeit von der Überprüfung durch das Ereignis bestimmte Nutzdaten (48) auf einem aktuellen Datenkanal senden.

9. System nach Anspruch 8, **dadurch gekennzeichnet, dass** der Sender (2) energetisch eigengespeist ist und nur ereignisgesteuert aus einem Schlafmodus in einen Funkmodus wechselt.

10. System nach Anspruch 8 oder 9, **dadurch gekennzeichnet, dass** der Empfänger (12) energetisch fremdgespeist ist und permanent in einem Funkmodus Daten empfängt.

## Claims

1. Method for the transmission of data from a transmitter to a receiver in a system for home automation, comprising:
- storage of at least two permanently programmed synchronisation channels in both a transmitter (2) and a receiver (12), wherein the synchronisation channels (40a-d) are used for the inclusion of devices (2, 12) for the home automation system,
- assignment of dynamically changing data channels next to the synchronisation channels, (40a-d) through a central control computer (22) associated with the home automation system,
- listening by the receiver on, in each case, one of all the fixed synchronisation channels (40a-d), so that within one scan interval (42) listening has taken place on all synchronisation channels (40a-d),
- event-driven emission, by the transmitter, of a preamble (46), followed by reference data (48) on one of the synchronisation channels (40a-d), wherein the preamble (46) is at least twice the length of the scan interval (42)
wherein
- the receipt of reference data is confirmed through a confirmation message on the same synchronisation channel (40a-d) on which the reference data were received,
- the confirmation message contains information concerning the current data channels, and
- the transmitter initially checks whether information concerning current data channels is present in the transmitter and, as appropriate, as a result of the event, certain reference data (48) are sent by the transmitter on a current data channel.

2. Method according to Claim 1, **characterised in that** at least two channels selected by a central control computer (22) are designated as synchronisation channels (40a-d).

3. Method according to one of the preceding claims, **characterised in that** the synchronisation channels (40a-d) are transmitted from a central control computer (22) to the transmitter (2) and/or the receiver (12) when included in the home automation system.

4. Method according to one of the preceding claims, **characterised in that** the transmitter (2) is shifted, in an event-driven manner, from a sleep mode into a radio mode and in the radio mode first the preamble (46) and subsequent reference data (48) determined by the event are transmitted on one of the synchronisation channels (40a-d).

5. Method according to one of the preceding claims, **characterised in that** reference data determined by the event (48) are transmitted by the transmitter directly after the event.

6. Method according to one of the preceding claims, **characterised in that** the transmitter should check the availability of the synchronisation channel (40a-d) on which first the preamble (46) and subsequent reference data (48) determined by the event are to be sent.

7. Method according to one of the preceding claims, **characterised in that** after the reference data (48) determined by the event have been sent on a current data channel, the transmitter waits for a confirmation message on a data channel and if the confirmation message does not materialise, the preamble (46) and the reference data (48) are transmitted on one of the synchronisation channels (40a-d).

8. System for home automation, comprising:
- at least one transmitter (2),
- at least one receiver (12),
- at least one central control computer (22) which designates dynamically changing data channels alongside the synchronisation channels (40a-d),
- wherein the transmitter (2) and the receiver (12) contain means for storage of at least two permanently programmed synchronisation channels (40a-d), wherein the synchronisation channels (40a-d) are designated for the inclusion of devices (2, 12) for the home automation system.
- wherein the receiver (12) contains means for listening on, in each case, one out of all fixed synchronisation channels (40a-d), that are arranged so that within a scan interval (42) listening has taken place on all synchronisation channels (40a-d),
- wherein the transmitter (2) contains means for the event-driven emission of a preamble (26) followed by reference data (48) on one of the synchronisation channels (40a-d), wherein the preamble (46) is at least twice the length of the scan interval (42) wherein
- the receiver (12) contains means for confirmation of the receipt of reference data (48) through a confirmation message on the same synchronisation channel (40a-d) on which the reference data (48) were received, and the confirmation message contains information concerning the current data channels, and
- the transmitter (2) contains means for checking whether there is information present in the transmitter concerning current data channels and the transmitter contains means which, depending on the checking as a result of the event, send certain reference data (48) on a current data channel.

9. System according to Claim 8, **characterised in that** the transmitter (2) has its own energy supply and only changes on an event-driven basis from a sleep mode to a radio mode.

10. System according to Claim 8 or 9, **characterised in that** the receiver (12) has an external energy supply and permanently receives data in a radio mode.

## Revendications

1. Procédé destiné à la transmission de données d'un émetteur à un récepteur dans un système d'automatisation domotique, comprenant
- l'enregistrement d'au moins deux canaux de synchronisation fixement programmés, aussi bien dans un émetteur (2) que dans un récepteur (12), sachant que les canaux de synchronisation (40a - d) sont utilisés pour inclure des appareils (2, 12) dans le système d'automatisation domotique,
- la détermination de canaux de données changeant de manière dynamique, à côté des canaux de synchronisation (40a - d), au moyen d'un calculateur de commande central (22) du système d'automatisation domotique,
- l'écoute, côté récepteur, sur chacun de tous les canaux de synchronisation (40a - d) fixes, de telle manière que ladite écoute ait lieu sur tous les canaux de synchronisation (40a - d) au cours d'un intervalle de balayage (42),
- Emission, côté émetteur, en fonction des événements, d'un préambule (46) suivi de données utiles (48), sur l'un des canaux de synchronisation (40a - d), sachant que le préambule (46) présente au moins la double longueur de l'intervalle de balayage (42),
sachant que
- la réception de données utiles est confirmée par un message de confirmation sur le même canal de synchronisation (40a - d) que celui sur lequel les données utiles ont été reçues
- des informations concernant des canaux de données actuels sont contenues dans le message de confirmation,
et que,
- côté émetteur, il est d'abord vérifié si des informations concernant les canaux de données actuels sont contenues dans l'émetteur et, le cas échéant, certaines données utiles (48) sont émises, côté émetteur, sur un canal de données actuel.

2. Procédé selon la revendication 1, **caractérisé en ce qu'**au moins deux canaux sélectionnés par le calculateur de commande central (22) sont déterminés comme canaux de synchronisation (40a - d) .

3. Procédé selon l'une des revendications précédentes,
**caractérisé en ce que** les canaux de synchronisation (40a - d) sont communiqués par un calculateur de commande central (22) à l'émetteur (2) et / ou au récepteur (12) lors d'une inclusion dans le système d'automatisation domotique.

4. Procédé selon l'une des revendications précédentes,
**caractérisé en ce que** l'émetteur (2) passe d'un mode de veille à un mode radio en fonction des événements et que, dans le mode radio, sont émis, sur l'un des canaux de synchronisation (40a - d), d'abord le préambule (46) et ensuite des données utiles (48), déterminées par les événements.

5. Procédé selon l'une des revendications précédentes,
**caractérisé en ce que,** côté émetteur, des données utiles (48), déterminées par les événements, sont émises directement à la suite de l'évènement.

6. Procédé selon l'une des revendications précédentes,
**caractérisé en ce que** la disponibilité des canaux de synchronisation (40a - d), sur lesquels d'abord le préambule (46) et ensuite les données utiles (48) déterminées par les événements doivent être émis, est vérifiée côté émetteur.

7. Procédé selon l'une des revendications précédentes
**caractérisé en ce que,** côté émetteur, après que les données utiles (48) déterminées en fonction des événements aient été émises sur un canal de données actuel, un message de confirmation est attendu sur un canal de données, et, en l'absence du message de confirmation, le préambule (46) et les données utiles (48) sont émises sur l'un des canaux de synchronisation (40a - d).

8. Système d'automatisation domotique qui comprend :
- au moins un émetteur (2),
- au moins un récepteur (12),
- au moins un calculateur de commande central (22), qui détermine, à côté des canaux de synchronisation (40a - d), des canaux de données changeant de manière dynamique,
- sachant que l'émetteur (2) et le récepteur (12) sont dotés de moyens de mise en mémoire d'au moins deux canaux de synchronisation (40a - d) fixement programmés, les canaux de synchronisation (40a - d) étant destinés à l'inclusion d'appareils (2, 12) dans le système d'automatisation domotique,
- sachant que le récepteur (12) est doté de moyens d'écoute, qui, respectivement prévus sur chacun de tous les canaux de synchronisation (40a - d) fixes, sont équipés de telle manière que l'écoute ait lieu sur tous les canaux de synchronisation (40a - d), dans un intervalle de balayage (42),
- sachant que l'émetteur (2) est doté de moyens qui sont destinés à émettre sur l'un des canaux de synchronisation (40a - d), en fonction des événements, un préambule (46), suivi de données utiles (48), le préambule (46) ayant au moins la double longueur de l'intervalle de balayage (42),
sachant que
le récepteur (12) est doté de moyens de vérification de données utiles (48) par un message de confirmation sur le même canal de synchronisation (40a - d) que celui sur lequel les données utiles (48) ont été reçues, et que le message de confirmation contient des informations concernant des canaux de données actuels,
et que
l'émetteur (2) est doté de moyens qui sont destinés à vérifier si des informations concernant des canaux de données actuels sont contenues dans l'émetteur (2), et l'émetteur est doté de moyens, qui, en fonction de la vérification, émettent, sur un canal de données actuel, les données utiles (48) déterminées par les événements.

9. Système selon la revendication 8, **caractérisé en ce que** l'émetteur (2) est alimenté en énergie intrinsèque et ne passe d'un mode de veille à un mode radio que par commandé en fonction des événements.

10. Système selon revendication 8 ou 9, **caractérisé en ce que** le récepteur (12) est alimenté en énergie de l'extérieur et reçoit en permanence des données dans un mode radio.
